(19) Europäisches Patentamt / European Patent Office / Office européen des brevets

(11) **EP 4 580 101 A1**

(12) **EUROPEAN PATENT APPLICATION**
published in accordance with Art. 153(4) EPC

(43) Date of publication:
**02.07.2025 Bulletin 2025/27**

(21) Application number: **23845553.9**

(22) Date of filing: **25.07.2023**

(51) International Patent Classification (IPC):
**H04L 5/00** (2006.01)    **H04W 72/04** (2023.01)
**H04W 72/12** (2023.01)

(52) Cooperative Patent Classification (CPC):
**H04L 5/00; H04W 72/04; H04W 72/12**

(86) International application number:
**PCT/CN2023/109136**

(87) International publication number:
**WO 2024/022344 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.07.2022 CN 202210899229**

(71) Applicant: **SHANGHAI LANGBO
COMMUNICATION TECHNOLOGY
COMPANY LIMITED
Shanghai 200240 (CN)**

(72) Inventors:
• **HU, Yang
  Shanghai 201206 (CN)**
• **ZHANG, Xiaobo
  Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD USED IN WIRELESS COMMUNICATION NODE, AND APPARATUS**

(57) Disclosed in the present application are a method used in a wireless communication node, and an apparatus. A first receiver, which receives a first information block and first signaling, the first information block being used for determining a plurality of uplink channel configurations, the first signaling being used for determining a target frequency domain resource set, all frequency domain resources contained in the target frequency domain resource set belonging to a first BWP, and the plurality of uplink channel configurations all being associated with the first BWP; and a first transmitter, which sends a target uplink physical channel. The target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is a certain uplink channel configuration among the plurality of uplink channel configurations, which is related to the target frequency domain resource set.

FIG. 1

**Description**

**Technical Field**

This application relates to a transmission method and apparatus in a wireless communication system, and in particular to a wireless signal transmission method and apparatus in a wireless communication system that supports a cellular network.

**Related Art**

Network energy saving is very important for implementing environment sustainability, reducing environmental impact, and saving operation costs. With a denser layout of a 5G network, use of more antennas, a larger bandwidth, utilization of more frequency bands, and continuous improvement of a transmission data rate, enhancing network energy saving has become an important aspect of 5G development. Dynamically adjusting a used frequency domain resource is an effective solution for implementing network energy saving.

**SUMMARY**

How to determine an uplink channel configuration for a used frequency domain resource is a key problem that needs to be solved. It should be noted that the foregoing descriptions use a scenario related to network energy saving as an example. This application is also applicable to other scenarios, for example, a scenario related to non-network energy saving, an enhance mobile broadband (eMBB), ultra reliable and low latency communication (URLLC), multicast broadcast services (MBS), Internet of things (IoT), Internet of vehicles, non-terrestrial networks (NTN), and shared spectrum, and achieves similar technical effects. In addition, using a unified solution in different scenarios (including but not limited to the scenario related to network energy saving, the scenario related to non-network energy saving, the eMBB, the URLLC, the MBS, the IoT, the Internet of vehicles, the NTN, and the shared spectrum) further helps to reduce hardware complexity and costs, or improve performance. Embodiments in any node of this application and features in the embodiments can be applied to any other node without conflict. The embodiments of this application and the features in the embodiments may be combined with each other without conflict.

As an embodiment, for explanations of the terminology in this application, refer to definitions of a standard protocol TS36 series of 3GPP.

As an embodiment, for explanations of the terminology in this application, refer to definitions of a standard protocol TS38 series of 3GPP.

As an embodiment, for explanations of the terminology in this application, refer to definitions of a standard protocol TS37 series of 3GPP.

As an embodiment, for explanations of the terminology in this application, refer to definitions of standard protocols of the institute of electrical and electronics engineers (IEEE).

This application discloses a method used in a first node for wireless communication, including:

receiving a first information block and first signaling, the first information block being used for determining a plurality of uplink channel configurations, the first signaling being used for determining a target frequency domain resource set, all frequency domain resources included in the target frequency domain resource set belonging to a first bandwidth part (BWP), and the plurality of uplink channel configurations all being associated with the first BWP; and

transmitting a target uplink physical channel,

where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

As an embodiment, benefits of the foregoing method include: This is beneficial to network energy saving.

As an embodiment, benefits of the foregoing method include: This is beneficial to energy saving of a user equipment.

As an embodiment, benefits of the foregoing method include: This improves a resource utilization rate.

As an embodiment, benefits of the foregoing method include: Signaling overheads are reduced.

As an embodiment, benefits of the foregoing method include: The compatibility is good.

As an embodiment, benefits of the foregoing method include: Modifications to the existing 3GPP standard are small.

According to an aspect of this application, the foregoing method is characterized in that:

The target uplink physical channel is a dynamically scheduled physical uplink shared channel (PUSCH), and each of the plurality of uplink channel configurations includes a configuration for the dynamically scheduled PUSCH.

As an embodiment, benefits of the foregoing method include: This improves flexibility of configuration of a dynamically scheduled PUSCH.

According to an aspect of this application, the foregoing method is characterized in that:

The target frequency domain resource set is one of a plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources included in any one of the plurality of frequency domain resource sets belong to the first BWP.

According to an aspect of this application, the foregoing method is characterized in that:

The first signaling is used for indicating that the target frequency domain resource set takes effect.

According to an aspect of this application, the foregoing method is characterized in that:

When the target frequency domain resource set takes effect, a frequency domain resource outside the target frequency domain resource set in the first BWP does not take effect.

According to an aspect of this application, the foregoing method is characterized in that:

The target frequency domain resource set is used for determining a frequency domain resource occupied by the target uplink physical channel.

According to an aspect of this application, the foregoing method is characterized in that:

Each of the plurality of uplink channel configurations is a PUSCH-Config.

As an embodiment, benefits of the foregoing method include: A plurality of PUSCH-Config are respectively configured for various available frequency domain resources of one BWP, thereby improving configuration or scheduling flexibility, and facilitating ensuring uplink transmission performance of a system when a configuration of network energy saving is applied.

According to an aspect of this application, the foregoing method is characterized in that:

A name of each of the plurality of uplink channel configurations includes a PUSCH-Config.

According to an aspect of this application, the foregoing method is characterized in that:

Each of the plurality of uplink channel configurations is a PUSCH-ConfigCommon.

As an embodiment, benefits of the foregoing method include: A plurality of PUSCH-ConfigCommon are respectively configured for various available frequency domain resources of one BWP, thereby improving configuration or scheduling flexibility, and facilitating ensuring uplink transmission performance of a system when a configuration of network energy saving is applied.

According to an aspect of this application, the foregoing method is characterized in that:

Each of the plurality of uplink channel configurations is a physical uplink control channel PUCCH-ConfigCommon.

As an embodiment, benefits of the foregoing method include: A plurality of PUCCH-ConfigCommon are respectively configured for various available frequency domain resources of one BWP, thereby improving configuration or scheduling flexibility, and facilitating ensuring uplink transmission performance of a system when a configuration of network energy saving is applied.

This application discloses a method used in a second node for wireless communication, including:

transmitting a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and

receiving a target uplink physical channel,

where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

According to an aspect of this application, the foregoing method is characterized in that:
The target uplink physical channel is a dynamically scheduled physical uplink shared channel (PUSCH), and each of the plurality of uplink channel configurations includes a configuration for the dynamically scheduled PUSCH.

According to an aspect of this application, the foregoing method is characterized in that:
The target frequency domain resource set is one of a plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources included in any one of the plurality of frequency domain resource sets belong to the first BWP.

According to an aspect of this application, the foregoing method is characterized in that:
The first signaling is used for indicating that the target frequency domain resource set takes effect.

According to an aspect of this application, the foregoing method is characterized in that:
When the target frequency domain resource set takes effect, a frequency domain resource outside the target frequency domain resource set in the first BWP does not take effect.

According to an aspect of this application, the foregoing method is characterized in that:
The target frequency domain resource set is used for determining a frequency domain resource occupied by the target uplink physical channel.

According to an aspect of this application, the foregoing method is characterized in that:
Each of the plurality of uplink channel configurations is a PUSCH-Config.

According to an aspect of this application, the foregoing method is characterized in that:
A name of each of the plurality of uplink channel configurations includes a PUSCH-Config.

According to an aspect of this application, the foregoing method is characterized in that:
Each of the plurality of uplink channel configurations is a PUSCH-ConfigCommon.

According to an aspect of this application, the foregoing method is characterized in that:
Each of the plurality of uplink channel configurations is a PUCCH-ConfigCommon.

This application discloses a first node for wireless communication, including:

a first receiver, configured to receive a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and

a first transmitter, configured to transmit a target uplink physical channel,

where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

This application discloses a second node for wireless communication, including:

a second transmitter, configured to transmit a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and

a second receiver, configured to receive a target uplink physical channel,

where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

## BRIEF DESCRIPTION OF THE DRAWINGS

By reading the detailed descriptions of the nonrestrictive embodiments made with reference to the accompanying drawings below, other features, objectives, and advantages of this application will become more apparent:

FIG. 1 shows a processing flowchart of a first node according to an embodiment of this application.

FIG. 2 shows a schematic diagram of a network architecture according to an embodiment of this application.

FIG. 3 shows a schematic diagram of a radio protocol architecture of a user plane and a control plane according to an embodiment of this application.

FIG. 4 shows a schematic diagram of a first communication device and a second communication device according to an embodiment of this application.

FIG. 5 shows a signal transmission flowchart according to an embodiment of this application.

FIG. 6 shows a schematic diagram of a relationship between a plurality of frequency domain resource sets, a target frequency domain resource set, a plurality of uplink channel configurations, and a target uplink channel configuration according to an embodiment of this application.

FIG. 7 shows a schematic diagram of a relationship between first signaling and a target frequency domain resource set according to an embodiment of this application.

FIG. 8 shows a schematic diagram of a relationship between a target frequency domain resource set and a target uplink physical channel according to an embodiment of this application.

FIG. 9 shows a structural block diagram of a processing apparatus in a first node device according to an embodiment of this application.

FIG. 10 shows a structural block diagram of a processing apparatus in a second node device according to an embodiment of this application.

## DETAILED DESCRIPTION

The technical solutions of this application will be further explained in detail below with reference to the accompanying drawings. It should be noted that, the embodiments of this application and the features in the embodiments may be combined with each other without conflict.

## **Embodiment 1**

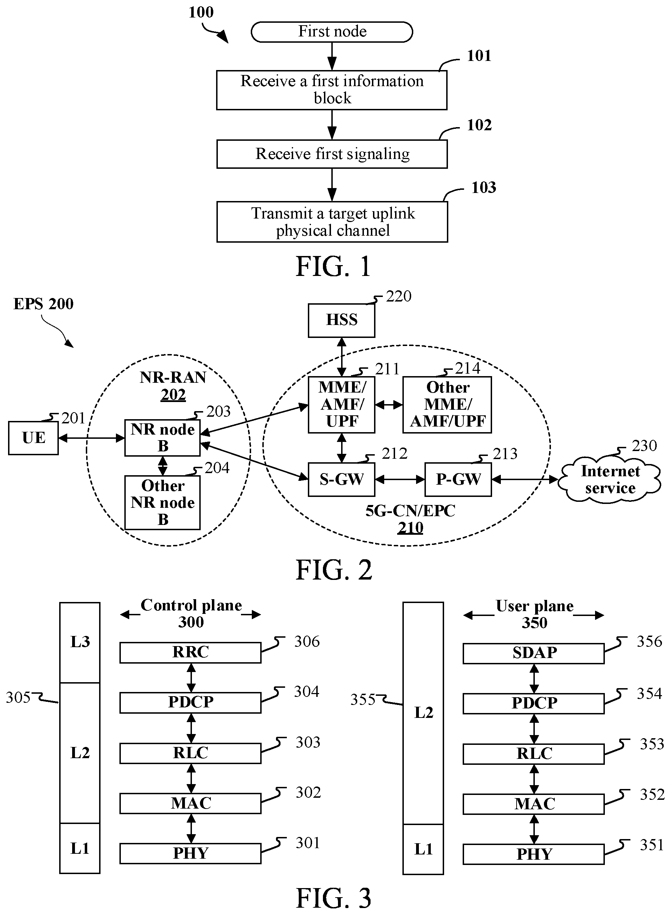

Embodiment 1 exemplarily shows a processing flowchart of a first node according to an embodiment of this application, as shown in FIG. 1.

In Embodiment 1, the first node in this application receives a first information block in step 101; receives first signaling in step 102; and transmits a target uplink physical channel in step 103.

In Embodiment 1, the first information block is used for determining a plurality of uplink channel configurations. The first signaling is used for determining a target frequency domain resource set. All frequency domain resources included in the target frequency domain resource set belong to a first BWP. The plurality of uplink channel configurations are all associated with the first BWP. The target uplink channel configuration is one of the plurality of uplink channel configurations. The target uplink channel configuration is at least used for determining a time domain resource occupied by the target uplink physical channel. Any two uplink channel configurations among the plurality of uplink channel configurations are used for configuring uplink physical channels of the same type. The target uplink channel configuration is an uplink channel configuration among the plurality of uplink channel configurations, which is related to the target frequency domain resource set.

As an embodiment, the first information block is physical layer signaling.

As an embodiment, the first information block includes physical layer signaling.

As an embodiment, the first information block is downlink control signaling.

As an embodiment, the first information block is a piece of uplink grant signaling.

As an embodiment, the first information block is dynamically configured.

As an embodiment, the first information block includes layer 1 (L1) signaling.

As an embodiment, the first information block includes Layer 1 (L1) control signaling.

As an embodiment, the first information block includes one or more fields in physical layer signaling.

As an embodiment, the first information block includes higher layer signaling.

As an embodiment, the first information block includes one or more fields in higher layer signaling.

As an embodiment, the first information block includes radio resource control (RRC) signaling.

As an embodiment, the first information block includes a medium access control layer control element (MAC CE).

As an embodiment, the first information block includes one or more fields in a piece of RRC signaling.

As an embodiment, the first information block includes one or more fields in an MAC CE.

As an embodiment, the first information block includes one or more fields in an information element (IE).

As an embodiment, the first information block includes a BWP-Uplink.

As an embodiment, the first information block includes BWP-UplinkCommon.

As an embodiment, the first information block includes BWP-UplinkDedicated.

As an embodiment, the first information block is a BWP-Uplink.

As an embodiment, the first information block is BWP-UplinkCommon.

As an embodiment, the first information block is BWP-UplinkDedicated.

As an embodiment, the first signaling is physical layer signaling.

As an embodiment, the first signaling includes physical layer signaling.

As an embodiment, the first signaling is downlink control signaling.

As an embodiment, the first signaling is in a downlink control information (DCI) format.

As an embodiment, the first signaling is DCI signaling.

As an embodiment, the first signaling is signaling in a DCI form.

As an embodiment, the first node receives the first signaling in a physical layer control channel.

As an embodiment, the first node receives the first signaling in a physical downlink control channel (PDCCH).

As an embodiment, the first signaling is in DCI format 0_0.

As an embodiment, the first signaling is in DCI format 0_1.

As an embodiment, the first signaling is in DCI format 0_2.

As an embodiment, the first signaling uses one of DCI format 0_0, DCI format 0_1, or DCI format 0_2.

As an embodiment, the first signaling uses a DCI format other than DCI format 0_0, DCI format 0_1, or DCI format 0_2.

As an embodiment, the first signaling is a piece of uplink grant signaling.

As an embodiment, the first signaling is dynamically configured.

As an embodiment, the first signaling includes layer 1 (L1) signaling.

As an embodiment, the first signaling includes Layer 1 (L1) control signaling.

As an embodiment, the first signaling includes one or more fields in physical layer signaling.

As an embodiment, the first signaling includes higher layer signaling.

As an embodiment, the first signaling includes one or more fields in higher layer signaling.

As an embodiment, the first signaling includes radio resource control (RRC) signaling.

As an embodiment, the first signaling includes a medium access control layer control element (MAC CE).

As an embodiment, the first signaling includes one or more fields in a piece of RRC signaling.

As an embodiment, the first signaling includes one or more fields in an MAC CE.

As an embodiment, the first signaling includes one or more fields in an information element (IE).

As an embodiment, the expression of transmitting a target uplink physical channel includes: transmitting a signal on the target uplink physical channel.

As an embodiment, the expression of transmitting a target uplink physical channel includes: transmitting a bit block on the target uplink physical channel, the bit block being transmitted on the target uplink physical channel after being subjected to at least some of cyclic redundancy check (CRC) attachment, code block segmentation, code block CRC attachment, channel coding, rate matching, code block concatenation, scrambling, modulation, layer mapping, transform precoding, precoding, mapping to virtual resource blocks, mapping from virtual to physical resource blocks, multi-carrier symbol generation, and modulation upconversion in sequence.

As an embodiment, the expression of transmitting a target uplink physical channel includes: transmitting a bit block on the target uplink physical channel, the bit block being transmitted on the target uplink physical channel after being subjected to at least some of cyclic redundancy check (CRC) attachment, code block segmentation, code block CRC attachment, channel coding, rate matching, code block concatenation, scrambling, modulation, layer mapping, transform precoding, precoding, mapping to virtual resource blocks, and mapping from virtual to physical resource blocks in sequence.

As an embodiment, the first information block is used for indicating the plurality of uplink channel configurations.

As an embodiment, the first information block explicitly indicates at least one of the plurality of uplink channel configurations.

As an embodiment, the first information block implicitly indicates at least one of the plurality of uplink channel configurations.

As an embodiment, the first information block is used for configuring the plurality of uplink channel configurations.

As an embodiment, the first information block includes the plurality of uplink channel configurations.

As an embodiment, each of the plurality of uplink channel configurations includes at least one field in at least one IE.

As an embodiment, each of the plurality of uplink channel configurations is an IE.

As an embodiment, each of the plurality of uplink channel configurations includes a configuration for a physical uplink control channel (PUCCH).

As an embodiment, each of the plurality of uplink channel configurations includes a configuration for a physical uplink shared channel (PUSCH).

As an embodiment, each of the plurality of uplink channel configurations includes a configuration for a random access channel.

As an embodiment, each of the plurality of uplink channel configurations is used for configuring a PUCCH.

As an embodiment, each of the plurality of uplink channel configurations is used for configuring a PUSCH.

As an embodiment, each of the plurality of uplink channel configurations is used for configuring a random access channel.

As an embodiment, each of the plurality of uplink channel configurations includes a configuration for a dynamically scheduled PUSCH.

As an embodiment, each of the plurality of uplink channel configurations includes PUCCH-Config.

As an embodiment, each of the plurality of uplink channel configurations includes PUSCH-Config.

As an embodiment, each of the plurality of uplink channel configurations includes RACH-ConfigCommon.

As an embodiment, each of the plurality of uplink channel configurations includes PUSCH-ConfigCommon.

As an embodiment, each of the plurality of uplink channel configurations includes PUCCH-ConfigCommon.

As an embodiment, each of the plurality of uplink channel configurations is RACH-ConfigCommon.

As an embodiment, each of the plurality of uplink channel configurations is PUSCH-ConfigCommon.

As an embodiment, each of the plurality of uplink channel configurations is PUCCH-ConfigCommon.

As an embodiment, a quantity of uplink channel configurations included in the plurality of uplink channel configurations is equal to 2.

As an embodiment, a quantity of uplink channel configurations included in the plurality of uplink channel configurations is greater than 2.

As an embodiment, the expression that the first signaling is used for determining a target frequency domain resource set includes: the first signaling is used for indicating the target frequency domain resource set.

As an embodiment, the expression that the first signaling is used for determining a target frequency domain resource set includes: a first field in the first signaling is used for indicating the target frequency domain resource set.

As an embodiment, the expression that the first signaling is used for determining a target frequency domain resource set includes: the first signaling is used for activating the target frequency domain resource set.

As an embodiment, the expression that the first signaling is used for determining a target frequency domain resource set includes: a first field in the first signaling is used for activating the target frequency domain resource set.

As an embodiment, the expression that the first signaling is used for determining a target frequency domain resource set includes: the first signaling is used for indicating that the target frequency domain resource set takes effect.

As an embodiment, the expression that the first signaling is used for determining a target frequency domain resource set includes: a first field in the first signaling is used for indicating that the target frequency domain resource set takes effect.

As an embodiment, when the target frequency domain resource set takes effect, a frequency domain resource in the target frequency domain resource set takes effect.

As an embodiment, when the target frequency domain resource set takes effect, a frequency domain resource outside the target frequency domain resource set in the first BWP does not take effect.

As an embodiment, when the target frequency domain resource set takes effect, a frequency domain resource in the target frequency domain resource set is available.

As an embodiment, when the target frequency domain resource set takes effect, a frequency domain resource outside the target frequency domain resource set in the first BWP is unavailable.

As an embodiment, when the target frequency domain resource set takes effect, a frequency domain resource in the target frequency domain resource set may be used for transmitting a PUSCH.

As an embodiment, when the target frequency domain resource set takes effect, a frequency domain resource outside the target frequency domain resource set in the first BWP may not be used for transmitting a PUSCH.

As an embodiment, the first field in the first signaling includes at least one bit.

As an embodiment, a name of the first field in the first signaling includes resource block (RB).

As an embodiment, a name of the first field in the first signaling includes RB set.

As an embodiment, a name of the first field in the first signaling includes Switch.

As an embodiment, a name of the first field in the first signaling includes Switching.

As an embodiment, a name of the first field in the first signaling includes BWP.

As an embodiment, a name of the first field in the first signaling includes change.

As an embodiment, the target frequency domain resource set includes at least one subcarrier.

As an embodiment, the target frequency domain resource set includes at least one physical resource block (PRB).

As an embodiment, the target frequency domain resource set includes at least one resource block(RB).

As an embodiment, the target frequency domain resource set includes at least one subband.

As an embodiment, frequency domain resources included in the target frequency domain resource set are consecutive.

As an embodiment, frequency domain resources included in the target frequency domain resource set are nonconsecutive.

As an embodiment, the first BWP is a bandwidth part (BWP).

As an embodiment, the first BWP is an uplink (UL) BWP.

As an embodiment, the first BWP includes consecutive common resource blocks.

As an embodiment, when an uplink channel configuration is used as a reference data type of setup and release entries in a BWP-UplinkDedicated IE corresponding to the first BWP, the uplink channel configuration is associated with the first BWP.

As an embodiment, when an uplink channel configuration is configured in a field of a BWP-UplinkDedicated IE corresponding to the first BWP, the uplink channel configuration is associated with the first BWP.

As an embodiment, when an uplink channel configuration is used as a reference data type of setup and release entries in a BWP-UplinkCommon IE corresponding to the first BWP, the uplink channel configuration is associated with the first BWP.

As an embodiment, when an uplink channel configuration is configured in a field of a BWP-UplinkCommon IE corresponding to the first BWP, the uplink channel configuration is associated with the first BWP.

As an embodiment, the expression that the plurality of uplink channel configurations are all associated with the first BWP includes: the plurality of uplink channel configurations are all configured for the first BWP.

As an embodiment, the expression that the plurality of uplink channel configurations are all associated with the first BWP includes: the plurality of uplink channel configurations are all used for PUSCH transmission on the first BWP.

As an embodiment, the expression that the plurality of uplink channel configurations are all associated with the first BWP includes: the plurality of uplink channel configurations are all used for dynamically scheduled PUSCH transmission on the first BWP.

As an embodiment, the expression that the plurality of uplink channel configurations are all associated with the first BWP includes: the plurality of uplink channel configurations are all configurations for dynamically scheduled PUSCH transmission on the first BWP.

As an embodiment, the expression that the plurality of uplink channel configurations are all associated with the first BWP includes: the plurality of uplink channel configurations are all used for PUCCH transmission on the first BWP.

As an embodiment, the expression that the plurality of uplink channel configurations are all associated with the first BWP includes: the plurality of uplink channel configurations are all used for random access channel transmission on the first BWP.

As an embodiment, the expression that the plurality of uplink channel configurations are all associated with the first BWP includes: the first information block belongs to a BWP-Uplink IE corresponding to the first BWP.

As an embodiment, the expression that the plurality of uplink channel configurations are all associated with the first BWP includes: the first information block belongs to a BWP-UplinkCommon IE corresponding to the first BWP.

As an embodiment, the expression that the plurality of uplink channel configurations are all associated with the first BWP includes: the first information block belongs to a BWP-UplinkDedicated IE corresponding to the first BWP.

As an embodiment, the expression that the plurality of uplink channel configurations are all associated with the first BWP includes: the first information block is a BWP-Uplink IE corresponding to the first BWP.

As an embodiment, the expression that the plurality of uplink channel configurations are all associated with the first BWP includes: the first information block is a BWP-UplinkCommon IE corresponding to the first BWP.

As an embodiment, the expression that the plurality of uplink channel configurations are all associated with the first BWP includes: the first information block is a BWP-UplinkDedicated IE corresponding to the first BWP.

As an embodiment, the target uplink physical channel is a PUSCH.

As an embodiment, the target uplink physical channel is a PUCCH.

As an embodiment, the target uplink physical channel is a random access channel.

As an embodiment, the target uplink channel configuration is used for indicating a time domain resource allocation table based on which a time domain resource occupied by the target uplink physical channel is determined.

As an embodiment, the target uplink channel configuration is used for indicating a time domain resource occupied by the target uplink physical channel.

As an embodiment, at least one field of the target uplink channel configuration is used for indicating a time domain resource occupied by the target uplink physical channel.

As an embodiment, the target uplink channel configuration is used for configuring a time domain resource occupied by the target uplink physical channel.

As an embodiment, at least one field of the target uplink channel configuration is used for configuring a time domain resource occupied by the target uplink physical channel.

As an embodiment, the time domain resource occupied by the target uplink physical channel includes a slot occupied by the target uplink physical channel.

As an embodiment, the time domain resource occupied by the target uplink physical channel includes a quantity of a slot occupied by the target uplink physical channel.

As an embodiment, the time domain resource occupied by the target uplink physical channel includes a slot occupied by a plurality of repeated transmissions of the target uplink physical channel.

As an embodiment, the time domain resource occupied by the target uplink physical channel includes a symbol occupied by the target uplink physical channel.

As an embodiment, the time domain resource occupied by the target uplink physical channel includes all symbols occupied by a plurality of repeated transmissions of the target uplink physical channel in a plurality of slots.

As an embodiment, the time domain resource occupied by the target uplink physical channel includes a symbol within a slot occupied by the target uplink physical channel.

As an embodiment, the symbol in this application is an orthogonal frequency division multiplexing (OFDM) symbol.

As an embodiment, the symbol in this application is a single carrier-frequency division multiple access (SC-FDMA) symbol.

As an embodiment, the symbol in this application is a discrete fourier transform spread (DFT-S-OFDM) symbol.

As an embodiment, the symbol in this application is a filter bank multi carrier (FBMC) symbol.

As an embodiment, the symbol in this application includes a cyclic prefix (CP).

As an embodiment, the symbol in this application includes consecutive time domain resources.

As an embodiment, the symbol in this application is a symbol in a slot.

As an embodiment, the symbol in this application is an uplink symbol.

As an embodiment, the symbol in this application is an uplink symbol or a flexible symbol.

As an embodiment, the symbol in this application is one of an uplink symbol, a downlink symbol, or a flexible symbol.

As an embodiment, the target uplink channel configuration is further used for determining precoding used by the target uplink physical channel.

As an embodiment, the target uplink channel configuration is further used for indicating precoding used by the target uplink physical channel.

As an embodiment, at least one field of the target uplink channel configuration is used for indicating precoding used by the target uplink physical channel.

As an embodiment, the target uplink channel configuration is further used for configuring precoding used by the target uplink physical channel.

As an embodiment, at least one field of the target uplink channel configuration is used for configuring precoding used by the target uplink physical channel.

As an embodiment, the target uplink channel configuration is further used for determining transmission power used by the target uplink physical channel.

As an embodiment, the target uplink channel configuration is further used for indicating transmission power used by the target uplink physical channel.

As an embodiment, at least one field of the target uplink channel configuration is used for indicating transmission power used by the target uplink physical channel.

As an embodiment, the target uplink channel configuration is further used for determining a size of a resource block group (RBG) for the target uplink physical channel.

As an embodiment, the target uplink channel configuration is further used for indicating a configuration of a size of an RBG for the target uplink physical channel.

As an embodiment, at least one field in the target uplink channel configuration is used for indicating a configuration of a size of a RBG for the target uplink physical channel.

As an embodiment, the target uplink channel configuration is further used for determining frequency hopping information of the target uplink physical channel.

As an embodiment, the target uplink channel configuration is further used for indicating frequency hopping information of the target uplink physical channel.

As an embodiment, at least one field in the target uplink channel configuration is used for indicating frequency hopping information of the target uplink physical channel.

As an embodiment, the first signaling is used for scheduling the target uplink physical channel.

As an embodiment, a piece of DCI outside the first signaling is used for scheduling the target uplink physical channel.

As an embodiment, a piece of DCI that is outside the first signaling and that is later than the first signaling is used for scheduling the target uplink physical channel.

As an embodiment, the first signaling is used for determining which uplink channel configuration among the plurality of uplink channel configurations is the target uplink channel configuration.

As an embodiment, the first signaling is used for indicating which uplink channel configuration among the plurality of uplink channel configurations is the target uplink channel configuration.

As an embodiment, the target frequency domain resource set is used for determining which uplink channel configuration among the plurality of uplink channel configurations is the target uplink channel configuration.

As an embodiment, the target uplink channel configuration is an uplink channel configuration among the plurality of uplink channel configurations, which depends on the target frequency domain resource set.

As an embodiment, the expression that the target uplink channel configuration is an uplink channel configuration among the plurality of uplink channel configurations, which is related to the target frequency domain resource set includes: The target frequency domain resource set is one of a plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources included in any one of the plurality of frequency domain resource sets belong to the first BWP.

As an embodiment, the expression that the target uplink channel configuration is an uplink channel configuration among the plurality of uplink channel configurations includes: a position of the target uplink channel configuration in the plurality of uplink channel configurations.

As an embodiment, the position of the target uplink channel configuration in the plurality of uplink channel configurations means: a sorting index of the target uplink channel configuration in the plurality of uplink channel configurations.

As an embodiment, the plurality of uplink channel configurations belong to an uplink channel configuration list, and the position of the target uplink channel configuration in the plurality of uplink channel configurations means: a sorting index of the target uplink channel configuration in the uplink channel configuration list.

## Embodiment 2

Embodiment 2 exemplarily shows a schematic diagram of a network architecture according to this application, as shown in FIG. 2.

FIG. 2 explains a diagram of a network architecture 200 of 5G new radio (NR), long-term evolution (LTE), and long-term evolution advanced (LTE-A) systems. The 5G NR or LTE network architecture 200 may be referred to as an evolved packet system (EPS) 200 or some other suitable terms. The EPS 200 may include one or more user equipments (UEs) 201, a next generation radio access network (NG-RAN) 202, an evolved packet core (EPC)/5G-CN (5G-core network) 210, a home subscriber server (HSS) 220, and an Internet service 230. The EPS may be interconnected with other access networks, but for simplicity, these entities/interfaces are not shown. As shown in the figure, the EPS provides a packet-switched service. However, a person skilled in the art will easily understand that various concepts presented throughout this application may be extended to a network providing a circuit-switched service or another cellular network. The NG-RAN includes an NR node B (gNB) 203 and another gNB 204. The gNB 203 provides a user and control plane protocol termination towards the UE 201. The gNB 203 may be connected to the another gNB 204 through an Xn interface (for example, a backhaul). The gNB 203 may alternatively be referred to as a base station, a base transceiver station, a radio base station, a radio transceiver, a transceiver function, a basic service set (BSS), an extended service set (ESS), a transmitting and receiving node (TRP), or some other suitable terms. The gNB 203 provides an access point to the EPC/5G-CN 210 for the UE 201. An example of the UE 201 includes a cellular phone, a smartphone, a session initiation protocol (SIP) phone, a laptop computer, a personal digital assistant (PDA), a satellite radio, non-ground base station communication, satellite mobile communication, a global positioning system, a multimedia apparatus, a video apparatus, a digital audio player (for example, an MP3 player), a camera, a game console, an unmanned aerial vehicle, an aircraft, a narrow band Internet of Things device, a machine type communication device, a land vehicle, an automobile, a wearable device, or any other apparatuses with similar functions. A person skilled in the art may alternatively call the UE 201 as a mobile station, a subscriber station, a mobile unit, a subscriber unit, a wireless unit, a remote unit, a mobile apparatus, a wireless apparatus, a wireless communications apparatus, a remote apparatus, a mobile subscriber station, an access terminal, a mobile terminal, a wireless terminal, a remote terminal, a handset, a user agent, a mobile client, a client, or some other suitable terms. The gNB 203 is connected to the EPC/5G-CN 210 through an S1/NG interface. The EPC/5G-CN 210 includes a mobility management entity (MM)/authentication management field (AMF)/user plane function (UPF) 211, another MME/AMF/UPF 214, a service gateway (S-GW) 212, and a packet data network gateway (P-GW) 213. The MME/AMF/UPF 211 is a control node that processes signaling between the UE 201 and the EPC/5G-CN 210. Generally, the MME/AMF/UPF 211 provides bearer and connection management. All user Internet protocol (IP) packets are delivered through the S-GW 212, and the S-GW 212 is connected to the P-GW 213. The P-GW 213 provides UE IP address assignment and other functions. The P-GW 213 is connected to the Internet service 230. The Internet service 230 includes an Internet protocol service corresponding to an operator, and may specifically include an Internet, an intranet, an IP multimedia subsystem (IMS), and a packet-switched streaming service.

As an embodiment, the UE 201 corresponds to the first node in this application.

As an embodiment, the UE 201 corresponds to the second node in this application.

As an embodiment, the UE 201 is a user equipment that supports network energy saving.

As an embodiment, the gNB 203 corresponds to the first node in this application.

As an embodiment, the gNB 203 corresponds to the second node in this application.

As an embodiment, the UE 201 corresponds to the first node in this application, and the gNB 203 corresponds to the second node in this application.

As an embodiment, the gNB 203 is a macrocellular base station.

As an embodiment, the gNB 203 is a micro cell base station.

As an embodiment, the gNB 203 is a picocell base station.

As an embodiment, the gNB 203 is a femtocell.

As an embodiment, the gNB 203 is a base station device that supports a large delay difference.

As an embodiment, the gNB 203 is a flight platform device.

As an embodiment, the gNB 203 is a satellite device.

As an embodiment, the first node and the second node in this application both correspond to the UE 201. For example, the first node and the second node perform V2X communication to each other.

## Embodiment 3

Embodiment 3 shows a schematic diagram of an embodiment of a radio protocol architecture of a user plane and a control plane according to this application, as shown in FIG. 3. FIG. 3 is a schematic diagram of an embodiment of a radio protocol architecture for a user plane 350 and a control plane 300. FIG. 3 shows, by using three layers, a radio protocol architecture for a first communication node device (a UE, a gNB, or an RSU in V2X) and a second communication node device (a gNB, a UE, or an RSU in V2X), or a control plane 300 between two UEs: layer 1, layer 2, and layer 3. layer 1 (an L1 layer) is the lowest layer and implements various physical layer (PHY) signal processing functions. The L1 layer is referred to as PHY301 in this specification. Layer 2 (L2 layer) 305 is above the PHY 301, and is responsible for links between the first communication node device and the second communication node device, and between two UEs through the PHY 301. The L2 layer 305 includes a medium access control (MAC) sublayer 302, a radio link control (RLC) sublayer 303, and a packet data convergence protocol (PDCP) sublayer 304, and these sublayers terminate at the second communication node device. The PDCP sublayer 304 provides multiplexing between different radio bearers and logical channels. The PDCP sublayer 304 further provides security by encrypting a data packet, and provides handover supporting between second communication node devices for the first communication node device. The RLC sublayer 303 provides segmentation and reassembling of an upper-layer data packet, retransmission of a lost data packet, and resorting of data packets, to compensate for unordered reception caused by hybrid automatic repeat request (HARQ). The MAC sublayer 302 provides multiplexing between logical and transmission channels. The MAC sublayer 302 is further responsible for allocating various radio resources (for example, resource blocks) in a cell between first communication node devices. The MAC sublayer 302 is further responsible for performing a HARQ operation. a radio resource control (RRC) sublayer 306 in layer 3 (an L3 layer) in the control plane 300 is responsible for obtaining a radio resource (i.e., a radio bearer) and configuring a lower layer by using RRC signaling between the second communication node device and the first communication node device. A radio protocol architecture of the user plane 350 includes layer 1 (an L1 layer) and layer 2 (an L2 layer). The radio protocol architecture for the first communication node device and the second communication node device in the user plane 350 is substantially the same as corresponding layers and sublayers in the control plane 300 for the physical layer 351, a PDCP sublayer 354 in the L2 layer 355, an RLC sublayer 353 in the L2 layer 355, and the MAC sublayer 352 in the L2 layer 355. However, the PDCP sublayer 354 further provides header compression for an upper-layer data packet to reduce radio transmission overheads. The L2 layer 355 in the user plane 350 further includes a service data adaptation protocol (SDAP) sublayer 356. The SDAP sublayer 356 is responsible for mapping between a quality of service (QoS) flow and a data radio bearer (DRB), to support diversity of services. Although not shown in the figure, the first communication node device may have a plurality of upper layers above the L2 layer 355, including a network layer (e.g., an IP layer) terminated at a P-GW on a network side and an application layer terminated at another end (e.g., a remote UE or a server) of a connection.

As an embodiment, the radio protocol architecture in FIG. 3 is applicable to the first node in this application.

As an embodiment, the radio protocol architecture in FIG. 3 is applicable to the second node in this application.

As an embodiment, at least a part of the first information block in this application is generated in the RRC sublayer 306.

As an embodiment, at least a part of the first information block in this application is generated in the MAC sublayer 302.

As an embodiment, at least a part of the first information block in this application is generated in the MAC sublayer 352.

As an embodiment, at least a part of the first information block in this application is generated in the PHY 301.

As an embodiment, at least a part of the first information block in this application is generated in the PHY 351.

As an embodiment, at least a part of the first signaling in this application is generated in the RRC sublayer 306.

As an embodiment, at least a part of the first signaling in this application is generated in the MAC sublayer 302.

As an embodiment, at least a part of the first signaling in this application is generated in the MAC sublayer 352.

As an embodiment, at least a part of the first signaling in this application is generated in the PHY 301.

As an embodiment, at least a part of the first signaling in this application is generated in the PHY 351.

## Embodiment 4

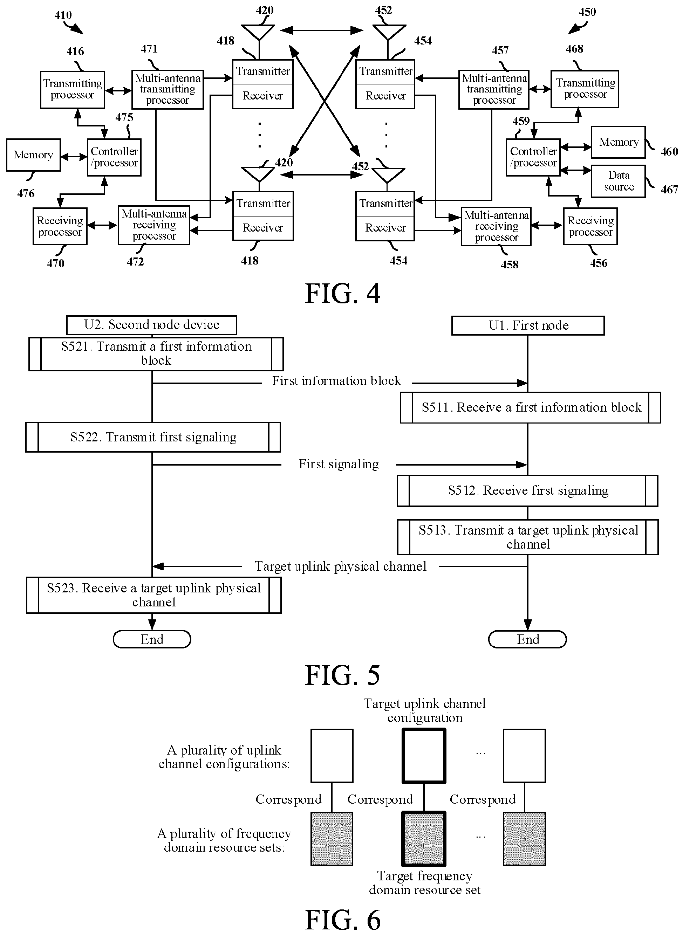

FIG. 4 shows a schematic diagram of a first communication device and a second communication device according to this application, as shown in FIG. 4. FIG. 4 is a block diagram of a first communication device 410 and a second communication device 450 that communicate with each other in an access network.

The first communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

During transmission from the first communication device 410 to the second communication device 450, at the first communication device 410, an upper-layer data packet from a core network is provided to the controller/processor 475. The controller/processor 475 implements functionality of an L2 layer. During transmission from the first communication device 410 to the first communication device 450, the controller/processor 475 provides header compression, encryption, packet segmentation and resorting, multiplexing between logical and transmission channels, and radio resource allocation to the second communication device 450 based on various priority measurements. The controller/processor 475 is further responsible for retransmission of a lost packet and signaling to the second communication device 450. The transmitting processor 416 and the multi-antenna transmitting processor 471 implement various signal processing functions for an L1 layer (i.e., a physical layer). The transmitting processor 416 implements coding and interleaving to promote forward error correction (FEC) at the second communication device 450, and mapping of signal clusters based on various modulation schemes (for example, binary phase shift keying (BPSK), orthogonal phase shift keying (QPSK), M-phase shift keying (M-PSK), and M-orthogonal amplitude modulation (M-QAM)). The multi-antenna transmitting processor 471 performs digital space precoding on a coded and modulated symbol, including codebook-based precoding and non-codebook-based precoding, and beam forming processing, to generate one or more space streams. The transmitting processor 416 then maps each space stream to a subcarrier, multiplexes the space stream with a reference signal (for example, a pilot) in a time domain and/or a frequency domain, and uses inverse fast Fourier transform (IFFT) to generate a physical channel that carries a time domain multi-carrier symbol stream. Subsequently, the multi-antenna transmitting processor 471 performs an analog precoding/beam forming transmitting operation on the time domain multi-carrier symbol stream. Each transmitter 418 converts a baseband multi-carrier symbol stream provided by the multi-antenna transmitting processor 471 into a radio frequency stream, and then provides the radio frequency stream to different antennas 420.

During transmission from the first communication device 410 to the second communication device 450, at the second communication device 450, each receiver 454 receives a signal through the corresponding antenna 452. Each receiver 454 restores information modulated onto a radio frequency carrier, converts the radio frequency stream into a baseband multi-carrier symbol stream, and provides the baseband multi-carrier symbol stream to the receiving processor 456. The receiving processor 456 and the multi-antenna receiving processor 458 implement various signal processing functions of the L1 layer. The multi-antenna receiving processor 458 performs an analog precoding/beam forming receiving operation on the baseband multi-carrier symbol stream from the receiver 454. The receiving processor 456 converts, from a time domain to a frequency domain by using FFT, the baseband multi-carrier symbol stream subjected to the analog precoding/beam forming receiving operation. In the frequency domain, a data signal and a reference signal of a physical layer are demultiplexed by the receiving processor 456. The reference signal is used for channel estimation. After the data signal is detected by a plurality of antennas in the multi-antenna receiving processor 458, any space stream that uses the second communication device 450 as a destination is restored. A symbol in each space stream is demodulated and restored in the receiving processor 456, and a soft decision is generated. Subsequently, the receiving processor 456 decodes and deinterleaves the soft decision to restore upper-layer data and a control signal that are transmitted by the first communication device 410 on a physical channel. Subsequently, the upper-layer data and the control signal are provided to the controller/processor 459. The controller/processor 459 implements a function of the L2 layer. The controller/processor 459 may be associated with the memory 460 that stores program codes and data. The memory 460 may be referred to as a computer-readable medium. During transmission from the first communication device 410 to the second communication device 450, the controller/processor 459 provides demultiplexing, packet reassembling, decryption, header decompression, and control signal processing between transmission and logical channels to restore the upper-layer data packet from the core network. Subsequently, the upper-layer data packet is provided to all protocol layers above the L2 layer. Various control signals may alternatively be provided to L3 for L3 processing.

During transmission from the second communication device 450 to the first communication device 410, at the second communication device 450, the data source 467 is used to provide the upper-layer data packet to the controller/processor 459. The data source 467 indicates all the protocol layers above the L2 layer. Similar to a transmission function at the first communication device 410 described during the transmission from the first communication device 410 to the second communication device 450, the controller/processor 459 implements header compression, encryption, packet segmentation and resorting, and multiplexing between logical and transmission channels based on radio resource allocation, and implements an L2 layer function for a user plane and a control plane. The controller/processor 459 is further responsible for retransmission of a lost packet and signaling to the first communication device 410. The transmitting processor 468 performs modulation mapping and channel encoding. The multi-antenna transmitting processor 457 performs digital multi-antenna space precoding, including codebook-based precoding and non-codebook-based precoding, and beam forming. Subsequently, the transmitting processor 468 modulates a generated space stream into a multi-carrier/single-carrier symbol stream. After an analog precoding/beam forming operation is performed on the multi-carrier/single-carrier symbol stream in the multi-antenna transmitting processor 457, the transmitter 454 provides the multi-carrier/single-carrier symbol stream to different antennas 452. Each transmitter 454 first converts a baseband symbol stream provided by the multi-antenna transmitting processor 457 into a radio frequency symbol stream, and then provides the radio frequency symbol stream to the antenna 452.

During transmission from the second communication device 450 to the first communication device 410, a function of the first communication device 410 is similar to a receiving function at the second communication device 450 described during transmission from the first communication device 410 to the second communication device 450. Each receiver 418 receives a radio frequency signal by through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement a function of the L1 layer. The controller/processor 475 implements a function of the L2 layer. The controller/processor 475 may be associated with the memory 476 that stores program codes and data. The memory 476 may be referred to as a computer-readable medium. During transmission from the second communication device 450 to the first communication device 410, the controller/processor 475 provides demultiplexing, packet reassembling, decryption, header decompression, and control signal processing between transmission and logical channels to restore the upper-layer data packet from the UE 450. The upper-layer data packet from the controller/processor 475 may be provided to the core network.

As an embodiment, the first node in this application includes the second communication device 450, and the second node in this application includes the first communication device 410.

As a sub-embodiment of the foregoing embodiment, the first node is a user equipment, and the second node is a user equipment.

As a sub-embodiment of the foregoing embodiment, the first node is a user equipment, and the second node is a relay node.

As a sub-embodiment of the foregoing embodiment, the first node is a relay node, and the second node is a user equipment.

As a sub-embodiment of the foregoing embodiment, the first node is a user equipment, and the second node is a base station device.

As a sub-embodiment of the foregoing embodiment, the first node is a relay node, and the second node is a base station device.

As a sub-embodiment of the foregoing embodiment, the second node is a user equipment, and the first node is a base station device.

As a sub-embodiment of the foregoing embodiment, the second node is a relay node, and the first node is a base station device.

As a sub-embodiment of the foregoing embodiment, the second communication device 450 includes: at least one controller/processor. The at least one controller/processor is responsible for a HARQ operation.

As a sub-embodiment of the foregoing embodiment, the first communication device 410 includes: at least one controller/processor. The at least one controller/processor is responsible for a HARQ operation.

As a sub-embodiment of the foregoing embodiment, the first communication device 410 includes: at least one controller/processor. The at least one controller/processor is responsible for performing error detection by using an acknowledgement (ACK) and/or non-acknowledgement (NACK) protocol, to support a HARQ operation.

As an embodiment, the second communication device 450 includes: at least one processor and at least one memory, the at least one memory including a computer program code. The at least one memory and the computer program code are configured to be used with the at least one processor. The second communication device 450 at least performs actions: receiving a first information block and first signaling, the first information block being used for determining a plurality of uplink channel configurations, the first signaling being used for determining a target frequency domain resource set, all frequency domain resources included in the target frequency domain resource set belonging to a first bandwidth part (BWP), and the plurality of uplink channel configurations all being associated with the first BWP; and transmitting a target uplink physical channel, where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

As a sub-embodiment of the foregoing embodiment, the second communication device 450 corresponds to the first node in this application.

As an embodiment, the second communication device 450 includes: a memory having a computer-readable instruction/program stored therein, the computer-readable instruction/program generating actions when executed by at least one processor, and the actions including: receiving a first information block and first signaling, the first information block being used for determining a plurality of uplink channel configurations, the first signaling being used for determining a target frequency domain resource set, all frequency domain resources included in the target frequency domain resource set belonging to a first bandwidth part (BWP), and the plurality of uplink channel configurations all being associated with the first BWP; and transmitting a target uplink physical channel, where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

As a sub-embodiment of the foregoing embodiment, the second communication device 450 corresponds to the first node in this application.

As an embodiment, the first communication device 410 includes: at least one processor and at least one memory, the at least one memory including a computer program code. The at least one memory and the computer program code are configured to be used with the at least one processor. The first communication device 410 at least performs actions: transmitting a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and receiving a target uplink physical channel, where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

As a sub-embodiment of the foregoing embodiment, the first communication device 410 corresponds to the second node in this application.

As an embodiment, the first communication device 410 includes: a memory having a computer-readable instruction/program stored therein, the computer-readable instruction/program generating actions when executed by at least one processor, and the actions including: transmitting a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and receiving a target uplink physical channel, where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

As a sub-embodiment of the foregoing embodiment, the first communication device 410 corresponds to the second node in this application.

As an embodiment, at least one of {the antenna 452, the receiver 454, the multi-antenna receiving processor 458, the receiving processor 456, the controller/processor 459, the memory 460, and the data source 467} is configured to receive the first information block in this application.

As an embodiment, at least one of {the antenna 420, the transmitter 418, the multi-antenna transmitting processor 471, the transmitting processor 416, the controller/processor 475, and the memory 476} is configured to transmit the first information block in this application.

As an embodiment, at least one of {the antenna 452, the receiver 454, the multi-antenna receiving processor 458, the receiving processor 456, the controller/processor 459, the memory 460, and the data source 467} is configured to receive the first signaling in this application.

As an embodiment, at least one of {the antenna 420, the transmitter 418, the multi-antenna transmitting processor 471, the transmitting processor 416, the controller/processor 475, and the memory 476} is configured to transmit the first signaling in this application.

As an embodiment, at least one of {the antenna 452, the transmitter 454, the multi-antenna transmitting processor 458, the transmitting processor 468, the controller/processor 459, the memory 460, and the data source 467} is configured to transmit the target uplink physical channel in this application.

As an embodiment, at least one of {the antenna 420, the receiver 418, the multi-antenna receiving processor 472, the receiving processor 470, the controller/processor 475, and the memory 476} is configured to receive the target uplink physical channel in this application.

## Embodiment 5

Embodiment 5 exemplarily shows a signal transmission flowchart of a first node according to an embodiment of this application, as shown in FIG. 5. In FIG. 5, a first node U1 and a second node U2 communicate with each other through an air interface.

The first node U1 receives a first information block in step S511; receives first signaling in step S512; and transmits a target uplink physical channel in step S513.

The second node U2 transmits a first information block in step S521; transmits first signaling in step S522; and receives a target uplink physical channel in step S523.

In Embodiment 5, the first information block is used for determining a plurality of uplink channel configurations. The first signaling is used for determining a target frequency domain resource set. All frequency domain resources included in the target frequency domain resource set belong to a first BWP. The plurality of uplink channel configurations are all associated with the first BWP. The target uplink channel configuration is one of the plurality of uplink channel configurations. The target uplink channel configuration is at least used for determining a time domain resource occupied by the target uplink physical channel. Any two uplink channel configurations among the plurality of uplink channel configurations are used for configuring uplink physical channels of the same type. The target uplink channel configuration is an uplink channel configuration among the plurality of uplink channel configurations, which is related to the target frequency domain resource set. The target frequency domain resource set is one of a plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources included in any one of the plurality of frequency domain resource sets belong to the first BWP. The target uplink physical channel is a PUSCH, and a name of each of the plurality of uplink channel configurations includes PUSCH-Config.

As a sub-embodiment of Embodiment 5, the expression that a name of each of the plurality of uplink channel configurations includes PUSCH-Config includes: The plurality of uplink channel configurations are respectively a plurality of PUSCH-Configs.

As a sub-embodiment of embodiment 5, the first signaling is used for indicating that the target frequency domain resource set takes effect, and a frequency domain resource outside the target frequency domain resource set in the first BWP does not take effect when the target frequency domain resource set takes effect. A frequency domain resource occupied by the target uplink physical channel belongs to the target frequency domain resource set.

As an embodiment, the first node U1 is the first node in this application.

As an embodiment, the second node U2 is the second node in this application.

As an embodiment, the first node U1 is a UE.

As an embodiment, the first node U1 is a base station.

As an embodiment, the second node U2 is a base station.

As an embodiment, the second node U2 is a UE.

As an embodiment, the air interface between the second node U2 and the first node U1 is a Uu interface.

As an embodiment, the air interface between the second node U2 and the first node U1 includes a cellular link.

As an embodiment, the air interface between the second node U2 and the first node U1 is a PC5 interface.

As an embodiment, the air interface between the second node U2 and the first node U1 includes a bylink.

As an embodiment, the air interface between the second node U2 and the first node U1 includes a radio interface between a base station device and a user equipment.

As an embodiment, the air interface between the second node U2 and the first node U1 includes a radio interface between a satellite device and a user equipment.

As an embodiment, the air interface between the second node U2 and the first node U1 includes a radio interface between a user equipment and a user equipment.

As an embodiment, a problem to be solved by this application include: how to determine the target uplink channel configuration.

As an embodiment, a problem to be solved by this application include: how to determine an uplink channel configuration for determining a time domain resource occupied by the target uplink physical channel.

As an embodiment, a problem to be solved by this application include: how to determine an applied uplink channel configuration according to the target frequency domain resource set.

As an embodiment, a problem to be solved by this application include: how to determine, according to an available frequency domain resource, a related configuration for a dynamically scheduled PUSCH.

As an embodiment, a problem to be solved by this application include: how to ensure uplink transmission performance in a scenario of network energy saving.

As an embodiment, a problem to be solved by this application include: how to ensure uplink transmission performance in a scenario of non network energy saving.

As an embodiment, a problem to be solved by this application include: how to ensure uplink transmission performance in a scenario in which energy of a user equipment is limited.

As an embodiment, a problem to be solved by this application include: how to ensure uplink transmission performance in a scenario in which an extended reality (XR) service is supported.

As an embodiment, a problem to be solved by this application include: How to ensure uplink transmission performance in an Internet of vehicles/V2X scenario.

As an embodiment, a problem to be solved by this application include: how to improve flexibility of an uplink channel configuration.

As an embodiment, a problem to be solved by this application include: how to enhance dynamic scheduling for a PUSCH.

As an embodiment, a problem to be solved by this application include: how to enhance transmission of a PUCCH.

As an embodiment, a problem to be solved by this application include: how to enhance transmission of a random access channel.

### Embodiment 6

FIG. 6 exemplarily shows a schematic diagram of a relationship between a plurality of frequency domain resource sets, a target frequency domain resource set, a plurality of uplink channel configurations, and a target uplink channel configuration according to an embodiment of this application, as shown in FIG. 6. In FIG. 6, a blank box represents one of the plurality of uplink channel configurations, and a blank box with a bold edge represents the target uplink channel configuration. a gray filled box represents one of the plurality of frequency domain resource sets, and a gray filled box with a bold edge represents the target frequency domain resource set.

In Embodiment 6, the target frequency domain resource set is one of the plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources included in any one of the plurality of frequency domain resource sets belong to a first BWP.

As an embodiment, a quantity of frequency domain resource sets included in the plurality of frequency domain resource sets is equal to 2.

As an embodiment, a quantity of frequency domain resource sets included in the plurality of frequency domain resource sets is greater than 2.

As an embodiment, each of the plurality of frequency domain resource sets includes at least one subcarrier.

As an embodiment, each of the plurality of frequency domain resource sets includes at least one physical resource block (PRB).

As an embodiment, each of the plurality of frequency domain resource sets includes at least one resource block (RB).

As an embodiment, each of the plurality of frequency domain resource sets includes at least one subband.

As an embodiment, frequency domain resources included in one of the plurality of frequency domain resource sets are consecutive.

As an embodiment, frequency domain resources included in one of the plurality of frequency domain resource sets are nonconsecutive.

As an embodiment, one of the plurality of frequency domain resource sets includes all frequency domain resources in the first BWP.

As an embodiment, one of the plurality of frequency domain resource sets is the first BWP.

As an embodiment, among the plurality of frequency domain resource sets, one frequency domain resource set is a proper subset of another frequency domain resource set.

As an embodiment, among the plurality of frequency domain resource sets, there are two frequency domain resource sets that have no intersection with each other.

As an embodiment, among the plurality of frequency domain resource sets, there are two frequency domain resource sets that only partially overlap each other.

As an embodiment, among the plurality of frequency domain resource sets, there are two frequency domain resource sets including different quantities of PRBs.

As an embodiment, among the plurality of frequency domain resource sets, there are two frequency domain resource sets including different quantities of RBs.

As an embodiment, among the plurality of frequency domain resource sets, there are two frequency domain resource sets including different quantities of subcarriers.

As an embodiment, the first information block is used for determining the plurality of frequency domain resource sets.

As an embodiment, the first information block is used for indicating the plurality of frequency domain resource sets.

As an embodiment, the first information block explicitly indicates a least one of the plurality of frequency domain resource sets.

As an embodiment, the first information block implicitly indicates a least one of the plurality of frequency domain resource sets.

As an embodiment, the first information block is used for configuring the plurality of frequency domain resource sets.

As an embodiment, the plurality of frequency domain resource sets are all configured in a BWP-Uplink IE corresponding to the first BWP.

As an embodiment, the plurality of frequency domain resource sets are all configured in a BWP-UplinkCommon IE corresponding to the first BWP.

As an embodiment, the plurality of frequency domain resource sets are all configured in a BWP-UplinkDedicated IE corresponding to the first BWP.

As an embodiment, the first information block is used for determining that the plurality of frequency domain resource sets respectively correspond to the plurality of uplink channel configurations.

As an embodiment, the first information block is used for indicating that the plurality of frequency domain resource sets respectively correspond to the plurality of uplink channel configurations.

As an embodiment, the plurality of uplink channel configurations are respectively configured for the plurality of frequency domain resource sets.

As an embodiment, for one of the plurality of uplink channel configurations: the uplink channel configuration is applied when the frequency domain resource set, corresponding to the uplink channel configuration, among the plurality of frequency domain resource sets takes effect.

As an embodiment, any two of the plurality of uplink channel configurations are not simultaneously applied.

**Embodiment 7**

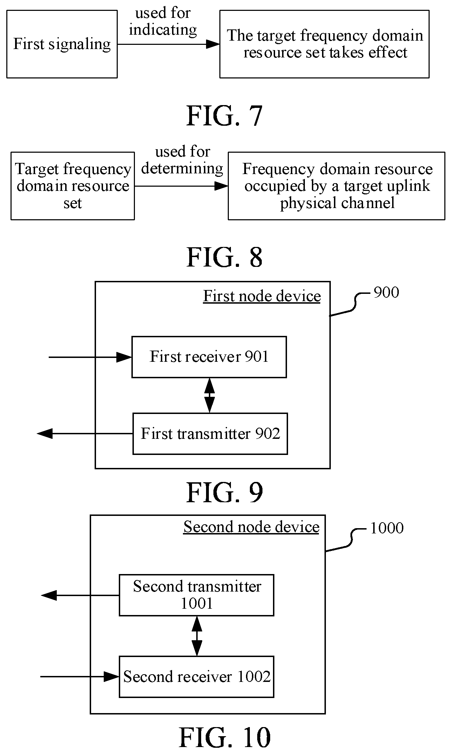

FIG. 7 exemplarily shows a schematic diagram of a relationship between first signaling and a target frequency domain resource set according to an embodiment of this application, as shown in FIG. 7.

In Embodiment 7, the first signaling is used for indicating that the target frequency domain resource set takes effect.

As an embodiment, the target frequency domain resource set takes effect at an end of the first signaling.

As an embodiment, the target frequency domain resource set starts to take effect from a k1-th symbol after the first signaling ends.

As an embodiment, k1 is default.

As an embodiment, k1 is equal to 1.

As an embodiment, k1 is equal to 2.

As an embodiment, k1 is equal to 3.

As an embodiment, k1 is equal to 4.

As an embodiment, k1 is equal to 7.

As an embodiment, k1 is equal to 14.

As an embodiment, k1 is equal to 28.

As an embodiment, k1 is equal to 42.

As an embodiment, k1 is equal to 56.

As an embodiment, k1 is not greater than 128.

As an embodiment, k1 is configurable.

As an embodiment, k1 is determined by UE capability.

As an embodiment, k1 is indicated by the first signaling.

As an embodiment, the first signaling is used for scheduling a physical channel, and the target frequency domain resource set takes effect from a slot to which the physical channel belongs in a time domain.

As an embodiment, the target frequency domain resource set starts to take effect from a k2-th slot after a slot to which the first signaling belongs in a time domain.

As an embodiment, k2 is default.

As an embodiment, k2 is equal to 1.

As an embodiment, k2 is equal to 2.

As an embodiment, k2 is equal to 3.

As an embodiment, k2 is equal to 4.

As an embodiment, k2 is equal to 5.

As an embodiment, k2 is equal to 6.

As an embodiment, k2 is equal to 7.

As an embodiment, k2 is equal to 8.

As an embodiment, k2 is not greater than 128.

As an embodiment, k2 is configurable.

As an embodiment, k2 is determined by UE capability.

As an embodiment, k2 is indicated by the first signaling.

As an embodiment, the target frequency domain resource set starts to take effect from a k3-th slot after transmission of hybrid automatic repeat request acknowledgement (HARQ-ACK) information for the first signaling ends.

As an embodiment, the target frequency domain resource set starts to take effect from a k3-th slot after transmission of HARQ-ACK information of a physical downlink shared channel (PDSCH) scheduled for the first signaling ends.

As an embodiment, the target frequency domain resource set starts to take effect from a k3-th slot after transmission of ACK for the first signaling ends.

As an embodiment, the target frequency domain resource set starts to take effect from a k3-th slot after transmission of ACK of a PDSCH scheduled for the first signaling ends.

As an embodiment, k3 is default.

As an embodiment, k3 is equal to 1.

As an embodiment, k3 is equal to 2.

As an embodiment, k3 is equal to 3.

As an embodiment, k3 is equal to 4.

As an embodiment, k3 is equal to 5.

As an embodiment, k3 is equal to 6.

As an embodiment, k3 is equal to 7.

As an embodiment, k3 is equal to 8.

As an embodiment, k3 is not greater than 128.

As an embodiment, k3 is configurable.

As an embodiment, k3 is determined by UE capability.

As an embodiment, k3 is indicated by the first signaling.

As an embodiment, k3 is related to a quantity of slots in a subframe.

As an embodiment, k3 is equal to 3N, and N is a quantity of slots in a subframe.

As an embodiment, k3 is equal to 3N +1, and N is a quantity of slots in a subframe.

As an embodiment, the target frequency domain resource set starts to take effect from a k4-th slot after a slot occupied by transmission of HARQ-ACK information for the first signaling.

As an embodiment, the target frequency domain resource set starts to take effect from a k4-th slot after a slot occupied by transmission of HARQ-ACK information of a PDSCH scheduled for the first signaling.

As an embodiment, the target frequency domain resource set starts to take effect from a k4-th slot after a slot occupied by transmission of ACK for the first signaling.

As an embodiment, the target frequency domain resource set starts to take effect from a k4-th slot after a slot occupied by transmission of ACK of a PDSCH scheduled for the first signaling.

As an embodiment, k4 is default.

As an embodiment, k4 is equal to 1.

As an embodiment, k4 is equal to 2.

As an embodiment, k4 is equal to 3.

As an embodiment, k4 is equal to 4.

As an embodiment, k4 is equal to 5.

As an embodiment, k4 is equal to 6.

As an embodiment, k4 is equal to 7.

As an embodiment, k4 is equal to 8.

As an embodiment, k4 is not greater than 128.

As an embodiment, k4 is configurable.

As an embodiment, k4 is determined by UE capability.

As an embodiment, k4 is indicated by the first signaling.

As an embodiment, k4 is related to a quantity of slots in a subframe.

As an embodiment, k4 is equal to 3N, and N is a quantity of slots in a subframe.

As an embodiment, k4 is equal to 3N +1, and N is a quantity of slots in a subframe.

### Embodiment 8

FIG. 8 exemplarily shows a schematic diagram of a relationship between a target frequency domain resource set and a target uplink physical channel according to an embodiment of this application, as shown in FIG. 8.

In Embodiment 8, the target frequency domain resource set is used for determining a frequency domain resource occupied by the target uplink physical channel.

As an embodiment, a frequency domain resource occupied by the target uplink physical channel belongs to the target frequency domain resource set.

As an embodiment, scheduling signaling of the target uplink physical channel indicates, from the target frequency domain resource set, a frequency domain resource occupied by the target uplink physical channel.

As an embodiment, a size of a frequency domain resource assignment field in scheduling signaling of the target uplink physical channel is related to the target frequency domain resource set.

As an embodiment, the target frequency domain resource set is used for determining a size of a frequency domain resource assignment field in scheduling signaling of the target uplink physical channel.

As an embodiment, a quantity of resource block(s) (RB(s)) included in the target frequency domain resource set is used for determining a size of a frequency domain resource assignment field in scheduling signaling of the target uplink physical channel.

As an embodiment, a quantity of resource block groups (RBGs) included in the target frequency domain resource set is used for determining a size of a frequency domain resource assignment field in scheduling signaling of the target uplink physical channel.

As an embodiment, the target frequency domain resource set is used for indicating a size of a frequency domain resource assignment field in scheduling signaling of the target uplink physical channel.

As an embodiment, a quantity of resource block(s) (RB(s)) included in the target frequency domain resource set is used for indicating a size of a frequency domain resource assignment field in scheduling signaling of the target uplink physical channel.

As an embodiment, a quantity of resource block groups (RBGs) included in the target frequency domain resource set is used for indicating a size of a frequency domain resource assignment field in scheduling signaling of the target uplink physical channel.

As an embodiment, a frequency domain resource assignment field in scheduling signaling of the target uplink physical channel includes $N_{RBG}$ bits, where $N_{RBG}$ is equal to a quantity of resource block groups included in the target frequency domain resource set.

As an embodiment, a frequency domain resource assignment field in scheduling signaling of the target uplink physical channel includes $\max\left(\left\lceil \log_2(N_{\mathrm{RB}}^{\mathrm{UL,BWP}}(N_{\mathrm{RB}}^{\mathrm{UL,BWP}}+1)/2)\right\rceil, N_{\mathrm{RBG}}\right)+1$ **bits**, where $N_{\mathrm{RBG}}$ is equal to a quantity of resource block groups included in the target frequency domain resource set, and $N_{\mathrm{RB}}^{\mathrm{UL,BWP}}$ is equal to a quantity of resource block(s) included in the target frequency domain resource set.

As an embodiment, a frequency domain resource assignment field in scheduling signaling of the target uplink physical channel includes $\left\lceil \log_2(N_{\mathrm{RB}}^{\mathrm{UL,BWP}}(N_{\mathrm{RB}}^{\mathrm{UL,BWP}}+1)/2)\right\rceil$ **bits**, where $N_{\mathrm{RB}}^{\mathrm{UL,BWP}}$ is equal to a quantity of resource block(s) included in the target frequency domain resource set.

## Embodiment 9

Embodiment 9 exemplarily shows a structural block diagram of a processing apparatus in a first node device, as shown in FIG. 9. In FIG. 9, a processing apparatus 900 of the first node device includes a first receiver 901 and a first transmitter 902.

As an embodiment, the first node device 900 is a base station.

As an embodiment, the first node device 900 is a user equipment.

As an embodiment, the first node device 900 is a relay node.

As an embodiment, the first node device 900 is an in-vehicle communication device.

As an embodiment, the first node device 900 is a user equipment that supports V2X communication.

As an embodiment, the first node device 900 is a relay node that supports V2X communication.

As an embodiment, the first node device 900 is a user equipment that supports an operation in a high-frequency spectrum.

As an embodiment, the first node device 900 is a user equipment that supports an operation in a shared spectrum.

As an embodiment, the first node device 900 is a user equipment that supports an XR service.

As an embodiment, the first receiver 901 includes at least one of the antenna 452, the receiver 454, the multi-antenna receiving processor 458, the receiving processor 456, the controller/processor 459, the memory 460, and the data source 467 shown in FIG. 4 of this application.

As an embodiment, the first receiver 901 includes at least the first five of the antenna 452, the receiver 454, the multi-antenna receiving processor 458, the receiving processor 456, the controller/processor 459, the memory 460, and the data source 467 shown in FIG. 4 of this application.

As an embodiment, the first receiver 901 includes at least the first four of the antenna 452, the receiver 454, the multi-antenna receiving processor 458, the receiving processor 456, the controller/processor 459, the memory 460, and the data source 467 shown in FIG. 4 of this application.

As an embodiment, the first receiver 901 includes at least the first three of the antenna 452, the receiver 454, the multi-antenna receiving processor 458, the receiving processor 456, the controller/processor 459, the memory 460, and the data source 467 shown in FIG. 4 of this application.

As an embodiment, the first receiver 901 includes at least the first two of the antenna 452, the receiver 454, the multi-antenna receiving processor 458, the receiving processor 456, the controller/processor 459, the memory 460, and the data source 467 shown in FIG. 4 of this application.

As an embodiment, the first transmitter 902 includes at least one of the antenna 452, the transmitter 454, the multi-antenna transmitting processor 457, the transmitting processor 468, the controller/processor 459, the memory 460, and the data source 467 shown in FIG. 4 of this application.

As an embodiment, the first transmitter 902 includes at least the first five of the antenna 452, the transmitter 454, the multi-antenna transmitting processor 457, the transmitting processor 468, the controller/processor 459, the memory 460, and the data source 467 shown in FIG. 4 of this application.

As an embodiment, the first transmitter 902 includes at least the first four of the antenna 452, the transmitter 454, the multi-antenna transmitting processor 457, the transmitting processor 468, the controller/processor 459, the memory 460, and the data source 467 shown in FIG. 4 of this application.

As an embodiment, the first transmitter 902 includes at least the first three of the antenna 452, the transmitter 454, the multi-antenna transmitting processor 457, the transmitting processor 468, the controller/processor 459, the memory 460, and the data source 467 shown in FIG. 4 of this application.

As an embodiment, the first transmitter 902 includes at least the first two of the antenna 452, the transmitter 454, the multi-antenna transmitting processor 457, the transmitting processor 468, the controller/processor 459, the memory 460, and the data source 467 shown in FIG. 4 of this application.

As an embodiment, the first receiver 901 is configured to receive a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP. The first transmitter 902 is configured to transmit a target uplink physical channel. The target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

As an embodiment, the target uplink physical channel is a dynamically scheduled PUSCH, and each of the plurality of uplink channel configurations includes a configuration for the dynamically scheduled PUSCH.

As an embodiment, the target frequency domain resource set is one of the plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources included in any one of the plurality of frequency domain resource sets belong to the first BWP.

As an embodiment, the first signaling is used for indicating that the target frequency domain resource set takes effect.

As an embodiment, when the target frequency domain resource set takes effect, a frequency domain resource outside the target frequency domain resource set in the first BWP does not take effect.

As an embodiment, the target frequency domain resource set is used for determining a frequency domain resource occupied by the target uplink physical channel.

As an embodiment, each of the plurality of uplink channel configurations is PUSCH-Config.

As an embodiment, each of the plurality of uplink channel configurations is PUSCH-ConfigCommon.

As an embodiment, each of the plurality of uplink channel configurations is PUCCH-ConfigCommon.

As an embodiment, a name of each of the plurality of uplink channel configurations includes PUSCH-Config.

As an embodiment, a name of each of the plurality of uplink channel configurations includes PUSCH-ConfigCommon.

As an embodiment, a name of each of the plurality of uplink channel configurations includes PUCCH-ConfigCommon.


**Embodiment 10**

Embodiment 10 exemplarily shows a structural block diagram of a processing apparatus in a second node device, as shown in FIG. 10. In FIG. 10, a processing apparatus 1000 of the second node device includes a second transmitter 1001 and a second receiver 1002.

As an embodiment, the second node device 1000 is a user equipment.

As an embodiment, the second node device 1000 is a base station.

As an embodiment, the second node device 1000 is a satellite device.

As an embodiment, the second node device 1000 is a relay node.

As an embodiment, the second node device 1000 is an in-vehicle communication device.

As an embodiment, the second node device 1000 is a user equipment that supports V2X communication.

As an embodiment, the second node device 1000 is a device that supports an operation in a high-frequency spectrum.

As an embodiment, the second node device 1000 is a device that supports an operation in a shared spectrum.

As an embodiment, the second node device 1000 is a device that supports an XR service.

As an embodiment, the second node device 1000 is one of a test apparatus, a test device, and a test meter.

As an embodiment, the second transmitter 1001 includes at least one of the antenna 420, the transmitter 418, the multi-antenna transmitting processor 471, the transmitting processor 416, the controller/processor 475, and the memory 476 shown in FIG. 4 of this application.

As an embodiment, the second transmitter 1001 includes at least the first five of the antenna 420, the transmitter 418, the multi-antenna transmitting processor 471, the transmitting processor 416, the controller/processor 475, and the memory 476 shown in FIG. 4 of this application.

As an embodiment, the second transmitter 1001 includes at least the first four of the antenna 420, the transmitter 418, the multi-antenna transmitting processor 471, the transmitting processor 416, the controller/processor 475, and the memory 476 shown in FIG. 4 of this application.

As an embodiment, the second transmitter 1001 includes at least the first three of the antenna 420, the transmitter 418, the multi-antenna transmitting processor 471, the transmitting processor 416, the controller/processor 475, and the memory 476 shown in FIG. 4 of this application.

As an embodiment, the second transmitter 1001 includes at least the first two of the antenna 420, the transmitter 418, the multi-antenna transmitting processor 471, the transmitting processor 416, the controller/processor 475, and the memory 476 shown in FIG. 4 of this application.

As an embodiment, the second receiver 1002 includes at least one of the antenna 420, the receiver 418, the multi-antenna receiving processor 472, the receiving processor 470, the controller/processor 475, and the memory 476 shown in FIG. 4 of this application.

As an embodiment, the second receiver 1002 includes at least the first five of the antenna 420, the receiver 418, the multi-antenna receiving processor 472, the receiving processor 470, the controller/processor 475, and the memory 476 shown in FIG. 4 of this application.

As an embodiment, the second receiver 1002 includes at least the first four of the antenna 420, the receiver 418, the multi-antenna receiving processor 472, the receiving processor 470, the controller/processor 475, and the memory 476 shown in FIG. 4 of this application.

As an embodiment, the second receiver 1002 includes at least the first three of the antenna 420, the receiver 418, the multi-antenna receiving processor 472, the receiving processor 470, the controller/processor 475, and the memory 476 shown in FIG. 4 of this application.

As an embodiment, the second receiver 1002 includes at least the first two of the antenna 420, the receiver 418, the multi-antenna receiving processor 472, the receiving processor 470, the controller/processor 475, and the memory 476 shown in FIG. 4 of this application.

As an embodiment, the second transmitter 1001 is configured to transmit a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP. The second receiver 1002 is configured to receive a target uplink physical channel. The target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

As an embodiment, the target uplink physical channel is a dynamically scheduled PUSCH, and each of the plurality of uplink channel configurations includes a configuration for the dynamically scheduled PUSCH.

As an embodiment, the target frequency domain resource set is one of the plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources included in any one of the plurality of frequency domain resource sets belong to the first BWP.

As an embodiment, the first signaling is used for indicating that the target frequency domain resource set takes effect.

As an embodiment, when the target frequency domain resource set takes effect, a frequency domain resource outside the target frequency domain resource set in the first BWP does not take effect.

As an embodiment, the target frequency domain resource set is used for determining a frequency domain resource occupied by the target uplink physical channel.

As an embodiment, each of the plurality of uplink channel configurations is PUSCH-Config.

As an embodiment, each of the plurality of uplink channel configurations is PUSCH-ConfigCommon.

As an embodiment, each of the plurality of uplink channel configurations is PUCCH-ConfigCommon.

As an embodiment, a name of each of the plurality of uplink channel configurations includes PUSCH-Config.

As an embodiment, a name of each of the plurality of uplink channel configurations includes PUSCH-ConfigCommon.

As an embodiment, a name of each of the plurality of uplink channel configurations includes PUCCH-ConfigCommon.

A person of ordinary skill in the art may understand that all or some of the steps of the above method may be implemented by instructing relevant hardware through a program. The program may be stored in a computer-readable storage medium, such as a read-only memory, a hard disk drive, a compact disc, or the like. Optionally, all or some of the steps of the above embodiments may alternatively be implemented by using one or more integrated circuits. Correspondingly, the module units in the above embodiments may be implemented in a hardware form or may be implemented in a form of software functional modules. This application does not limit a combination of software and hardware in any specific form. The first node device in this application includes, but is not limited to, a wireless communication device such as a mobile phone, a tablet computer, a notebook computer, an Internet card, a low-power device, an eMTC device, an NB-IoT

device, an in-vehicle communication device, an aircraft, an airplane, an unmanned aerial vehicle, or a tele-controlled aircraft. The second node device in this application includes, but is not limited to, a wireless communication device such as a mobile phone, a tablet computer, a notebook computer, an Internet card, a low-power device, an eMTC device, an NB-IoT device, an in-vehicle communication device, an aircraft, an airplane, an unmanned aerial vehicle, or a tele-controlled aircraft. A user equipment or a UE or a terminal in this application includes, but is not limited to, a wireless communication device such as a mobile phone, a tablet computer, a notebook computer, an Internet card, a low-power device, an eMTC device, an NB-IoT device, an in-vehicle communication device, an aircraft, an airplane, an unmanned aerial vehicle, or a tele-controlled aircraft. A base station device or a base station or a network side device in this application includes, but is not limited to, a device such as a macrocellular base station, a microcellular base station, a home base station, a relay base station, an eNB, a gNB, a transmitting and receiving node TRP, a global navigation satellite system (GNSS), a relay satellite, a satellite base station, an air base station, a test apparatus, a test device, and a test meter.

A person skilled in the art should understand that this application may be implemented in other specified forms without departing from the core or basic characteristics of the present invention. Therefore, the currently disclosed embodiments should be considered as being descriptive rather than being restrictive in any way. The scope of this application is determined by the appended claims, rather than the foregoing description, and all changes within equivalent meanings and regions of the claims are considered to be included therein.

## Claims

1. A first node for wireless communication, comprising:

   a first receiver, configured to receive a first information block and first signaling, the first information block being used for determining a plurality of uplink channel configurations, the first signaling being used for determining a target frequency domain resource set, all frequency domain resources comprised in the target frequency domain resource set belonging to a first bandwidth part (BWP), and the plurality of uplink channel configurations all being associated with the first BWP; and
   a first transmitter, configured to transmit a target uplink physical channel,
   where the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

2. The first node according to claim 1, wherein the target uplink physical channel is a dynamically scheduled physical uplink shared channel (PUSCH), and each of the plurality of uplink channel configurations comprises a configuration for the dynamically scheduled PUSCH.

3. The first node according to claim 1 or 2, wherein the target frequency domain resource set is one of a plurality of frequency domain resource sets; the plurality of frequency domain resource sets respectively correspond to the plurality of uplink channel configurations; the target uplink channel configuration is an uplink channel configuration, corresponding to the target frequency domain resource set, among the plurality of uplink channel configurations; and all frequency domain resources comprised in any one of the plurality of frequency domain resource sets belong to the first BWP.

4. The first node according to any one of claims 1 to 3, wherein the first signaling is used for indicating that the target frequency domain resource set takes effect.

5. The first node according to any one of claims 1 to 4, wherein when the target frequency domain resource set takes effect, a frequency domain resource outside the target frequency domain resource set in the first BWP does not take effect.

6. The first node according to any one of claims 1 to 5, wherein the target frequency domain resource set is used for determining a frequency domain resource occupied by the target uplink physical channel.

7. The first node according to any one of claims 1 to 6, wherein each of the plurality of uplink channel configurations is a PUSCH-Config.

**8.** A second node for wireless communication, comprising:

a second transmitter, configured to transmit a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and
a second receiver, configured to receive a target uplink physical channel,
wherein the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

**9.** A method used in a first node for wireless communication, comprising:

receiving a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and
transmitting a target uplink physical channel,
wherein the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

**10.** A method used in a second node for wireless communication, comprising:

transmitting a first information block and first signaling, the first information block being used for determining a plurality of uplink channel configurations, the first signaling being used for determining a target frequency domain resource set, all frequency domain resources included in the target frequency domain resource set belonging to a first BWP, and the plurality of uplink channel configurations all being associated with the first BWP; and
receiving a target uplink physical channel,
wherein the target uplink channel configuration is one of the plurality of uplink channel configurations; the target uplink channel configuration is at least used for determining a time domain resource occupied by the target uplink physical channel; any two uplink channel configurations among the plurality of uplink channel configurations are used for configuring uplink physical channels of the same type; and the target uplink channel configuration is an uplink channel configuration among the plurality of uplink channel configurations, which is related to the target frequency domain resource set.

**100**

First node

↓

Receive a first information block — **101**

↓

Receive first signaling — **102**

↓

Transmit a target uplink physical channel — **103**

## FIG. 1

**EPS 200**

**NR-RAN 202**

HSS — **220**

UE — **201**

NR node B — **203**

Other NR node B — **204**

MME/ AMF/ UPF — **211**

Other MME/ AMF/UPF — **214**

S-GW — **212**

P-GW — **213**

Internet service — **230**

**5G-CN/EPC 210**

## FIG. 2

**Control plane 300**

**L3**

RRC — **306**

**305**

PDCP — **304**

**L2**

RLC — **303**

MAC — **302**

**L1**

PHY — **301**

**User plane 350**

**355**

SDAP — **356**

**L2**

PDCP — **354**

RLC — **353**

MAC — **352**

**L1**

PHY — **351**

## FIG. 3

**410**

**416** **471** **418** **420** **452** **454** **457** **468** **450**

Transmitting processor — Multi-antenna transmitting processor — Transmitter / Receiver ⟷ Transmitter / Receiver — Multi-antenna transmitting processor — Transmitting processor

**475**

Memory — Controller /processor

**476**

Transmitter / Receiver — Transmitter / Receiver

**420** **452**

Controller /processor — Memory **460**

**459**

Data source **467**

Receiving processor — Multi-antenna receiving processor — Transmitter / Receiver — Transmitter / Receiver — Multi-antenna receiving processor — Receiving processor

**470** **472** **418** **454** **458** **456**

## FIG. 4

| U2. Second node device | | U1. First node |
|---|---|---|
| S521. Transmit a first information block | | |
| | ── First information block ──▶ | |
| | | S511. Receive a first information block |
| S522. Transmit first signaling | | |
| | ── First signaling ──▶ | |
| | | S512. Receive first signaling |
| | | S513. Transmit a target uplink physical channel |
| | ◀── Target uplink physical channel ── | |
| S523. Receive a target uplink physical channel | | |
| End | | End |

## FIG. 5

Target uplink channel configuration

A plurality of uplink channel configurations:

Correspond    Correspond    ...    Correspond

A plurality of frequency domain resource sets:

Target frequency domain resource set

## FIG. 6

EP 4 580 101 A1

First signaling → used for indicating → The target frequency domain resource set takes effect

**FIG. 7**

Target frequency domain resource set → used for determining → Frequency domain resource occupied by a target uplink physical channel

**FIG. 8**

First node device — 900

First receiver 901

First transmitter 902

**FIG. 9**

Second node device — 1000

Second transmitter 1001

Second receiver 1002

**FIG. 10**

## INTERNATIONAL SEARCH REPORT

| International application No. |
| --- |
| **PCT/CN2023/109136** |

**A. CLASSIFICATION OF SUBJECT MATTER**

H04L 5/00(2006.01)i; H04W 72/04(2023.01)i; H04W 72/12(2023.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT; 3GPP: 接收, 发送, 信令, 多, 上行, 信道, 配置, 频域, 资源, 集合, 属于, 带宽, 部分, 关联, 相关, 有关, 时域, 生效, 指示, 对应, PUSCH, BWP, bandwidth, part, signal, UL, channel, frequency, domain, resource, time, configure, associate

**C. DOCUMENTS CONSIDERED TO BE RELEVANT**

| Category* | Citation of document, with indication, where appropriate, of the relevant passages | Relevant to claim No. |
| --- | --- | --- |
| A | CN 110167167 A (VIVO COMMUNICATION TECHNOLOGY CO., LTD.) 23 August 2019 (2019-08-23)<br>description, paragraphs [0055]-[0171], and figures 1-9 | 1-10 |
| A | CN 114223156 A (MEDIATEK INC.) 22 March 2022 (2022-03-22)<br>entire document | 1-10 |
| A | CN 110391881 A (ZTE CORP.) 29 October 2019 (2019-10-29)<br>entire document | 1-10 |
| A | WO 2021119996 A1 (GUANGDONG OPPO MOBILE COMMUNICATIONS CO., LTD.) 24 June 2021 (2021-06-24)<br>entire document | 1-10 |
| A | US 2020383095 A1 (ELECTRONICS AND TELECOMMUNICATIONS RESEARCH INSTITUTE) 03 December 2020 (2020-12-03)<br>entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 October 2023** | **23 October 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/109136**

| Patent document cited in search report | | | Publication date (day/month/year) | Patent family member(s) | | | Publication date (day/month/year) |
|---|---|---|---|---|---|---|---|
| CN | 110167167 | A | 23 August 2019 | None | | | |
| CN | 114223156 | A | 22 March 2022 | US | 2022295452 | A1 | 15 September 2022 |
| | | | | WO | 2021027936 | A1 | 18 February 2021 |
| CN | 110391881 | A | 29 October 2019 | US | 2021160880 | A1 | 27 May 2021 |
| | | | | WO | 2019201247 | A1 | 24 October 2019 |
| | | | | EP | 3783977 | A1 | 24 February 2021 |
| | | | | EP | 3783977 | A4 | 08 June 2022 |
| WO | 2021119996 | A1 | 24 June 2021 | None | | | |
| US | 2020383095 | A1 | 03 December 2020 | US | 11564223 | B2 | 24 January 2023 |

Form PCT/ISA/210 (patent family annex) (July 2022)